# EUROPEAN PATENT APPLICATION

(11) **EP 1 743 518 A1**
(43) Date of publication of application: **17.01.2007**
(21) Application number: 06008939.8
(22) Date of filing: 28.04.2006
(51) Int. Cl.: A01J 25/13

(54) **A roll mould for pastafilata cheese**

(30) Priority: 14.07.2005 IT to20050098
(71) Applicant: CMT Costruzioni Meccaniche e Tecnologia S.p.A., 12010 San Lorenzo di Peveragno CN (IT)
(72) Inventor: Tomatis, Stefano, 12010 San Lorenzo di Peveragno (CN) (IT)
(74) Representative: Spandonari, Carlo

(57) **Abstract**

A cylinder (10) has a lateral surface carved with a plurality of narrow, elongated recesses (18), having substantially equal depths and widths, and communicating, via respective passages (24) with means for supplying pressurized water (20, 30, 32), which means are arranged for momentary operation to eject the contents of the recesses. Preferably, the recesses extend longitudinally to the cylinder and are sized to produce cheesesticks of a weight less than 1 gram.

## Description

### DISCLOSURE

This invention is concerned with a roll mould for pastafilata cheese.
It is well known that pastafilata cheese, or more especially mozzarella, is universally used in the preparation of pizza, as a coating layer intended to melt when the pizza is baked. In the commercial preparation of pizzas in pizza restaurants, preference is given to a pastafilata cheese that is harder than classical mozzarella, generally a cylindrical or block-shaped cheese weighing several kilograms, known as "silano per pizzeria". The "silano", or cheeseblock, is roughly chopped into irregular crumbs or lumps, having a diameter of few cm, which are then spread on the pizza.

In order to more quickly fill orders in pizza restaurants, it is usual today to pre-shred or pre-chop the cheeseblocks in the dairy itself, and to package the resulting lumps or sticks in a bag. In other words, after the cheeseblocks have been conventionally moulded and hardened in cold water in the dairy, a further processing step is performed, which consists in shredding or chopping up the cheeseblock before packaging. This processing step not only involves an additional cost, but also a lengthening of the production time. This time lengthening is to be added to the hardening time, which is inherently quite long, due to the slow cooling of the cheeseblocks, caused by their considerable size.

A main object of the invention is now to provide a mould by which the above cheese sticks for pizza restaurants can be produced directly in the pastafilata moulding step, so as to dispense, on the one hand, with the shredding step, and, on the other hand, to drastically decrease the cooling time, due to the small size of the sticks requiring hardening.

Another object is to provide the above mould so that it can be installed in conventional roll-moulding machines, with little or no adjustments.

The above objects, as well as other objects and advantages, are attained by the invention with a roll mould for the production of pastafilata cheesesticks for pizza restaurants, having the features recited in claim 1.

A preferred embodiment of the invention will now be described, by way of example, with reference to the attached drawings, wherein:
Fig. 1 is a side view of a roll mould according to the preferred embodiment of the invention, mounted on a moulding machine shown in part;
Fig. 2 is a view in transverse cross-section of the roll mould of Fig. 1, in association with a partly shown pastafilata feeder; and
Fig. 3 is an enlarged view of a detail of Fig. 2.

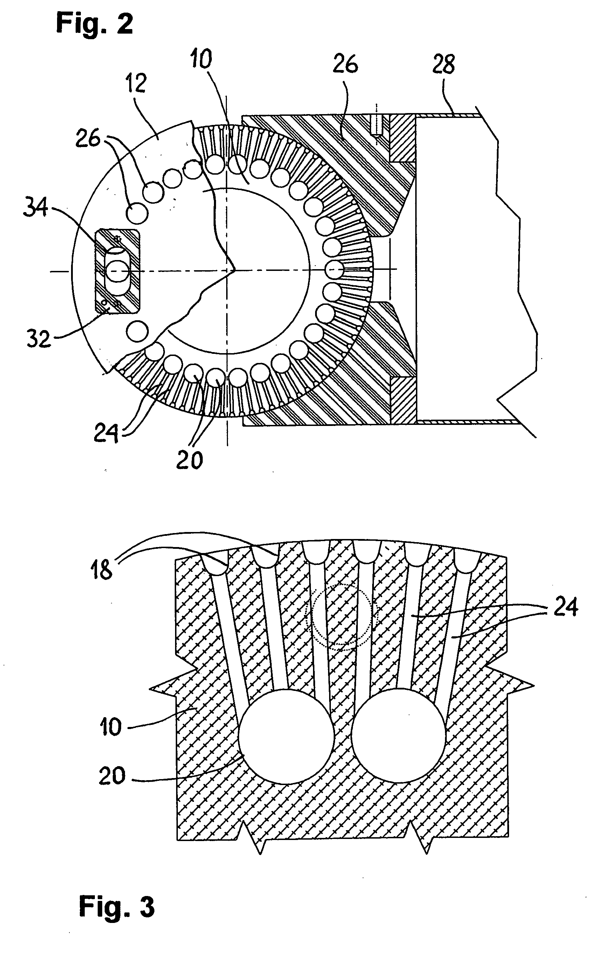

With reference to the Figures, a roll mould 10 according to the invention comprises a metal cylinder having a diameter of 250 mm, which is axially hollow for purposes of lightening, provided with end flanges 12 and 14, and installable in a conventional moulding machine 16, in a way known per se, so that it will be driven in counterclockwise rotation according to the view of Fig. 2.

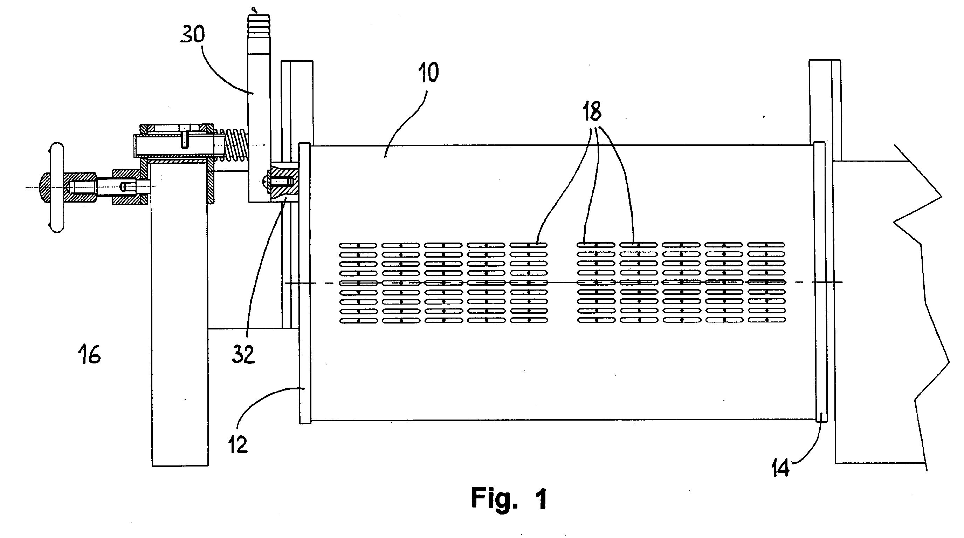

The lateral surface of roll 10 is carved with a plurality of grooves or elongated recesses 18 (which for simplicity are only partly shown in Fig. 1), each of which is about 35 mm long, about 4 mm wide, and 4 mm deep. Each recess is shaped as a flared groove (see Fig. 3). The body of the roll, at a radial distance of about 3 cm from the surface of roll 10, is pierced with a plurality of longitudinal bores 20, each having a diameter of about 15 mm, and circularly and coaxially arranged around the axis of the roll. The bores 20 are closed at their respective opposite ends by their respective flanges 12, 14 so that respective chambers are defined. At each chamber 20, flange 12 (broken away in Fig. 2) has apertures 22, for purposes explained below.

The bottoms of recesses 18 are in communication with one of chambers 20 via respective thin passages 24. For simplicity, the passages of recesses that are aligned in a peripheral direction converge by groups of three into one common chamber 20.

As can be seen in Fig. 2, a delivery mouth 26 of a pastafilata feeder 28 abuts against the lateral surface of roll 10, which is mounted for counterclockwise rotation. Feeder 28 is part of the moulding machine and is known per se. Mouth 26 is preferably of a material such as PTFE or the like, and is shaped to match the lateral surface of the roll.

A water injector 30, which can be supplied with pressurized water from a source not shown, is terminated in a self-lubricating shoe 32, for instance made of PTFE, which opens through a slot-shaped aperture and slides against flange 12 at apertures 22.

In operation, the pastafilata feeder 28 drives the pastafilata forward onto rotating roll 10, recesses 18 are filled with slurry, and by sliding along the shaped sides of the feeding mouth, individual pastafilata sticks are formed within the recesses. While roll 10 rotates counterclockwise in Fig. 2, the pastafilata sticks in the filled recesses begin to cool down, and when the corresponding chamber 20 reaches shoe 32 of injector 30, pressurized water is injected into the chamber and through passages 24 floods the recesses, thereby ejecting the respective sticks, which will fall into an underlying hardening vat, not shown.

It can be seen that, by using the roll mould of the invention, pizza cheesesticks can be obtained directly from the moulding machine, without further processing. As as person skilled in the art will appreciate, due to the small size of the sticks, the hardening step will of only a few minutes, in contrast to the times of one hour or more that are required for cheeseblocks of several kilograms.

With recesses having the dimensions stated above as an example, the resulting cheesesticks have a weight of about 0.5 grams, though of course the size of the recesses, and consequently of the cheesesticks, are not critical, and indeed are variable in a broad range. However, in order to obtain the full benefits of the invention, the cheesesticks should have a weight less than about 1 gram each.

The arrangement of the recesses can also be changed with respect to what has been shown and described. By way of example, the recesses could be inclined with respect to the axial direction of the roll mould, or they could even be arranged in a peripheral direction, although the arrangement shown in the drawings is of course easiest to manufacture.

It should also be understood that the internal structure of the roll mould might be modified with respect to the above description, provided that the bottom of each recess is in communication with means for supplying the ejection water.

## Claims

1. A roll mould for pastafilata cheese, **characterized in that** it comprises a cylinder (10) whose lateral surface has a plurality of narrow, elongated recesses (18), having substantially equal depth and width, and communicating, via respective passages (24) with means for supplying pressurized water (20, 30, 32) arranged for momentary operation to eject the contents of the recesses.

2. The roll mould of claim 1, **characterized in that** said recesses (18) are flared towards the surface of the roll.

3. The roll mould of claim 1 or 2, **characterized in that** said recesses (18) extend logitudinally to the roll axis.

4. The roll mould of claim 1, 2 or 3, **characterized in that** said passages (24) communicate with longitudinal chambers (30) inside the roll, arranged for being periodically flooded with pressurized water.

5. The roll mould of any of claims 1 to 4, **characterized in that** said recesses (18) are sized to produce pastafilata sticks of a weight less than 1 gram.

6. The roll mould of claim 5, **characterized in that** each of said recesses (18) has a width and a depth of about 4 mm.

7. The roll mould of claim 5, **characterized in that** each of said recesses (18) has a length of about 35 mm.
